# EUROPEAN PATENT SPECIFICATION

(11) **EP 2 725 669 B1**
(45) Date of publication and mention of the grant of the patent: **27.02.2019**
(21) Application number: 13190366.8
(22) Date of filing: 25.10.2013
(51) Int. Cl.: H02G 1/08, G02B 6/44

(54) **Closing device for a conduit and kit for laying a dragging rope into high length conduits**
Verschlussvorrichtung für eine Rohrleitung und Kit zum Verlegen eines Zugseils in Rohrleitungen großer Länge
Dispositif de fermeture d'un conduit et kit pour poser un câble traînant dans des conduits de longueur élevée

(30) Priority: 25.10.2012 IT MI20121813
(43) Date of publication of application: 30.04.2014
(73) Proprietor: Amonini, Gino, 23030 Chiuro, (SO) (IT)
(72) Inventor: Lersa, Pierluigi, CH-7745 LI CURT (CH)
(74) Representative: Leihkauf, Steffen Falk

(56) References cited:
- EP-A1- 0 247 944
- FR-A1- 2 191 314
- GB-A- 2 151 414
- GB-A- 2 404 427
- US-A- 1 036 114
- US-A- 4 840 352

## Description

The present invention relates to the field of the positioning or laying of cables within conduits having a very large length. Furthermore, the present invention also relates to the field of the inspection of conduits having a large length by visual means associated to the above-mentioned shuttle.

Particularly, the present invention relates to a closing member suitable to close a conduit end to form a closed chamber within the conduit, interposed between the closing member and a dragging member or shuttle suitable to run along the conduit throughout its length due to the effect of pressurized air insufflated into the conduit through the closing member.

Generally, a technique for laying electric cables within a conduit is known, by preventively laying a guide rope throughout the conduit length, and subsequently tying a free end of the cables to be laid to a free end of such rope. By subsequently dragging the guide rope to the opposite side with respect to the inlet of the conduit through which the cables are inserted, the cables are dragged within the conduit throughout the conduit length.

In order to drag the guide rope into the conduit, several systems are known; particularly a dragging device or shuttle may be used, which, once it has been inserted into the conduit through an end thereof, may be pushed by pressurized air that is insufflated in the conduit downstream of the shuttle.

In order to create a closed chamber downstream of the shuttle in which pressurized air as to be insufflated to push the shuttle, conduit closure devices are used, which have to ensure the seal with the conduit, while allowing the insertion of pressurized air into the same conduit.

In other terms, in order to fully exploit the pressurized air flow, it is necessary to close the conduit first end by a closure device that allows inserting air into the conduit in order to push the shuttle, while preventing the air leakage from such end. At the same time, the need is felt, to allow the free sliding of a dragging rope through the same closure device.

Some devices aiming quite unsuccessfully to meet these needs are known.

For example, US4840352 shows plug having a cylindrical sleeve with longitudinal grooves and a wedge-shaped body suitable to advance within the sleeve to enlarge the outer diameter thereof and be secured within the conduit at a conduit first end.

Such a known device has many drawbacks. Particularly, a first drawback is given by the fact that it cannot ensure a high seal with the conduit inner surface due to the presence of the same sleeve grooves, causing the leakage of part of the injected air.

Another drawback is given by the fact that such device is formed by a plurality of pieces that have to be manufactured with a precise tolerance.

Another important drawback is given by the fact that it does not allow adapting to conduits with a deformed or irregular end diameter.

Document FR2191314 discloses a gun for launching a routing cable in a cylindrical pipe. Document GB2404427 discloses an expanding pipe stopper for inserting within a pipe. Document EP0247944 discloses a pneumatic device for the introduction of cables in a tube. Document US1036114 discloses a cup carrier for passing cables through pipe lines. Document GB 2151414 discloses an apparatus for feeding cable through a conduit.

The technical problem addressed by the present invention is to provide a closure device of a first end of the conduit, capable of providing a high seal to air leakage, and firm securing ability within the conduit, allowing it to perfectly adapt to the conduit end even if it is deformed or irregular.

Another object of the present invention is to provide a closure device capable of providing at the same time a high leakage seal and of allowing an easy insertion of a pressurized air flow, while preventing the leakage thereof, and allowing the free sliding of the dragging rope.

A further object of the present invention is to provide a closure device having a structure that is simple and formed by a reduced number of components.

Still another object of the present invention is to provide a closing member capable of adapt to different diameters of the conduit.

These and further objects and advantages are achieved by a closure device as described in the independent claim and by a kit comprising the closure device.

Further objects, solutions, and advantages are present in the embodiments described herein below and claimed in the dependent claims attached herein.

Different embodiments of the invention will be now described herein below through implementation examples, which are given by way of illustrative example only and in a non-limiting form, with reference particularly to the attached Figures, in which:
Fig. 1 shows a partial perspective sectional view of a shuttle according to the invention and of a closure device arranged within a length of a conduit and forming a kit for laying a guide rope in a conduit according to the invention;
Fig. 2 shows a sectional view with a longitudinal plane of a shuttle according to the invention and of a closure device forming a kit for laying a guide rope in a conduit according to the invention;

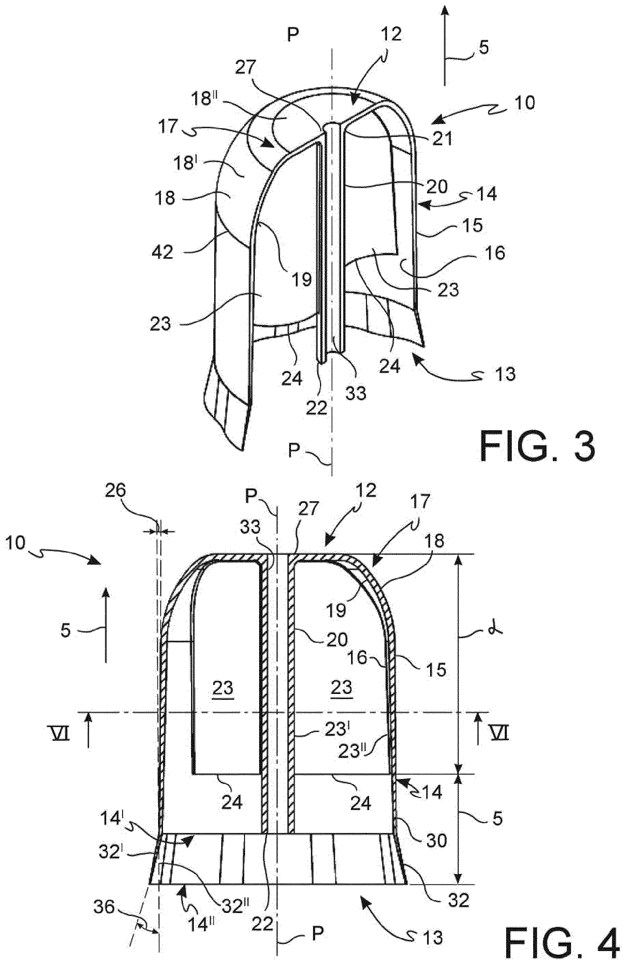

Figs. 3 and 4 show a partial sectional view of a shuttle by a plane passing through the longitudinal axis;
Fig. 5 shows a rear view of the shuttle;
Fig. 5A shows, a sectional view with a longitudinal plane of a schematic view of a shuttle comprising elastic connecting means schematized by springs;
Fig. 6 shows a sectional view of the shuttle by a plane of section VI-VI orthogonal to the longitudinal axis;
Fig. 7 shows a rear view of the shuttle in a deformed configuration at a crushing of the conduit;
Fig. 8 shows a sectional view with a plane passing through the axis of the conduit, the shuttle, and the closing member, in which the shuttle is in a deformed configuration at a crushing of the conduit;
Fig. 9 shows a sectional view with a plane passing through the axis of the conduit, the shuttle, and the closing member when the shuttle is at a narrow curve of an irregular or damaged conduit;
Fig. 10 shows a shuttle in which the dragging rope is inserted in the through hole of the elongated member, and locked at the shuttle front end;
Fig. 11 shows a shuttle in which the dragging rope is replaced by an electric supplying and signaling rope of a video camera mounted at the shuttle front end;
Fig. 12 shows in section with a longitudinal plane the shuttle in a deformed configuration in which the rear projection faces outwardly of the sleeve portion during a return travel of the shuttle;

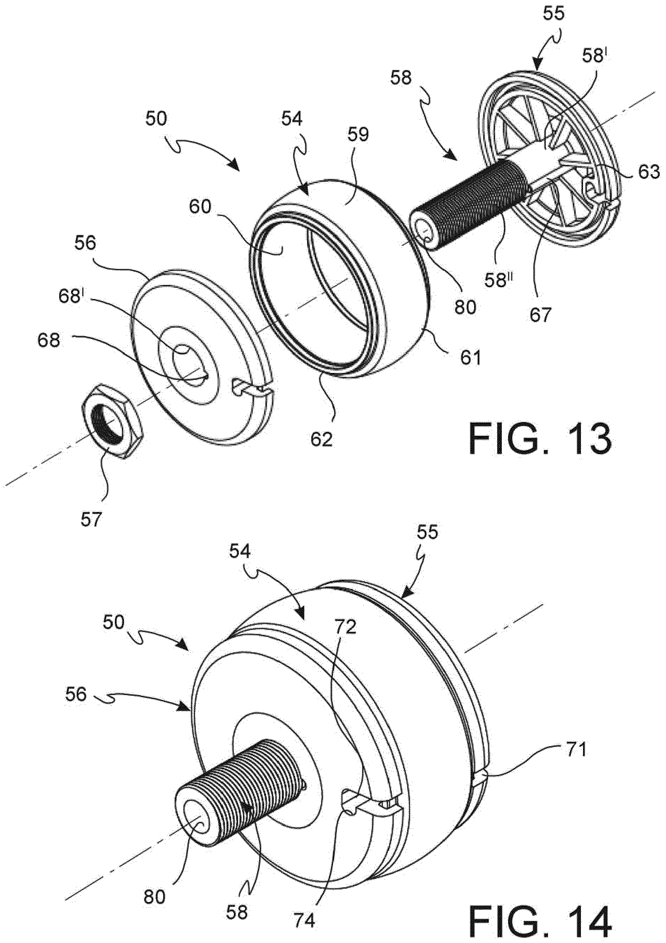

Fig. 13 shows an exploded drawing of a closure device according to the invention;
Fig. 14 shows a perspective view of the closing member of Fig. 13;

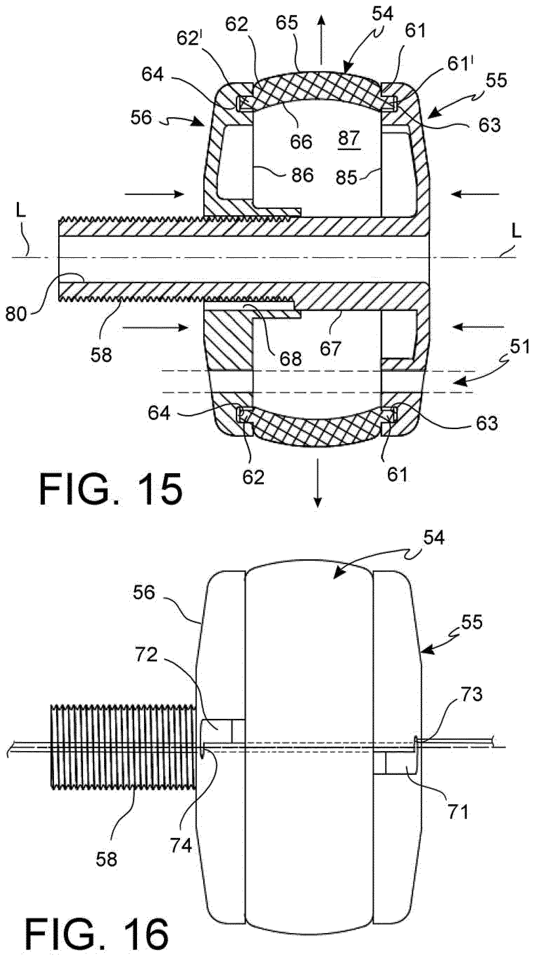

Figs. 15 and 16 show a closure device in section with a longitudinal plane and in a view, respectively;

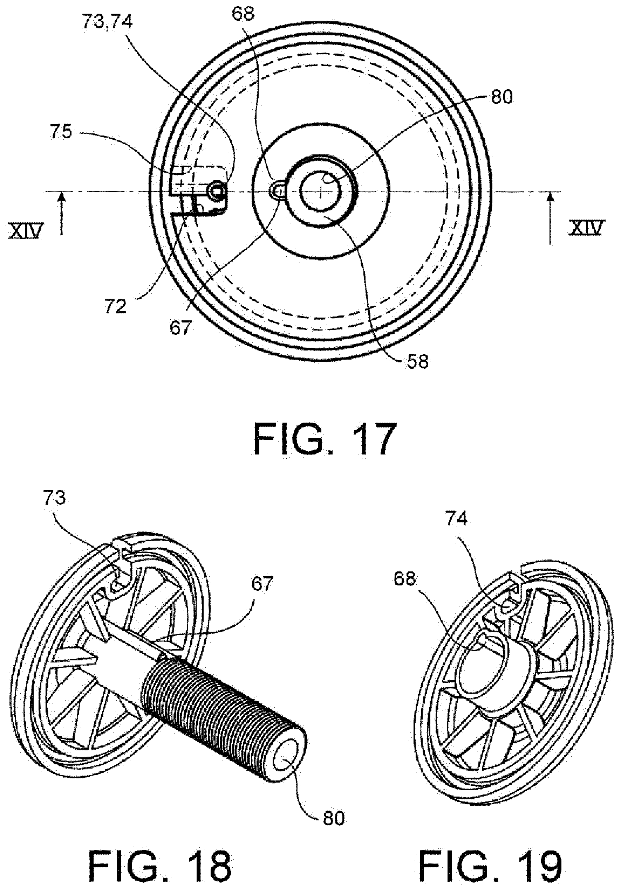

Fig. 17 shows a front view of the closure device;
Figs. 18 and 19 show in a perspective view the contrast members of the closure device.

Reference will be made herein below to a "shuttle" to mean a dragging body suitable to run along the conduit reacting to the thrust generated by a pressurized fluid inserted into the conduit at the first end. By "longitudinal" will be meant any direction parallel to the shuttle longitudinal axis. Reference will be further made to a "skirt" to mean a membrane portion of the shuttle extending about the longitudinal axis. Reference will be further made to "with shape continuity" to mean that two contiguous surfaces are mutually connected with continuity, without interruptions and without sharp edges. Reference will be made to a "dragging rope" to mean a rope suitable to be tied to the shuttle to be dragged into the conduit along the entire extent thereof in a first operative step, and subsequently tied to the cables to be dragged into the conduit so that, by dragging an end of the dragging rope, the other end thereof will be able to drag the cables. Therefore, the dragging rope may be formed by a small rope or cable having a tensile strength suitable to withstand the dragging tension of the cables into the conduit. The dragging rope has also to be of a reduced specific gravity, so as to oppose a reduced value of resistance to the shuttle forward motion. The terms "front" and "rear" are indicated with respect to the forward direction of the shuttle when it is pushed by the pressurized air flow along the conduit. By "axis of the conduit" is meant a line following the center of the cross sections of the conduit along the path thereof, therefore it may also be a curved line.

With reference to the figures, a closure device of a conduit is generally indicated by the reference 50.

Such closure device 50 of a conduit 100 forms a closed length 103 defined by said closure device 50 mounted at a first end 6 of the conduit and by a shuttle 10 slidably inserted into said conduit 100, said shuttle 10 being pushed towards a second end 8 of the conduit opposite the first end by a pressurized air flow 2 introduced in said closed length 103 through said closure device 50.

Such closure device 50 comprises an elastic sealing member 54 having a substantially cylindrical or continuous annular tubular shape having a first base end 61 and an opposite base end 62, said sealing member 54 defining a longitudinal axis L-L.

Such device 50 further comprises a first compression member 55, for example, in the shape of a disc, couplable to said first end 61, and a second compression member 56, for example, in the shape of a disc, couplable to said second end.

The first and the second compression members have an outer edge so configured as to be able to be inserted within the conduit 100, particularly, they have an outer edge repeating the shape of the internal section of the conduit 100 in a direction transversal to the conduit 100 axis.

The closure device 50 also comprises compression means connected to said compression members 54 and 55, which are suitable to compress said sealing member 54 between said first compression member 55 and said second compression member 56, so that the sealing member 54 deforms by radially expanding outwardly, thus increasing the diameter thereof and creating a seal with an inner surface of the conduit.

Furthermore, the closure device 50 has a pressurized air inlet 80 through the closure device 50 and a through opening 51 through the closure device 50 to allow the passage of the dragging rope.

According to an embodiment, the sealing member 54 has an outwardly convex outer surface 59 and/or an outwardly concave inner surface 60, so that, when the sealing member 54 is compressed between the first compression member 55 and the second compression member 56, said sealing member 54 has a preferred outwardly deformation configuration.

In other terms, the sealing member 54 has a section with a longitudinal plane formed by an outwardly arched portion.

In still other terms, the sealing member extends about a surface that is cylindrical and radially outwardly convex.

In further terms, the sealing member 54 is defined by the rotation about the longitudinal axis L-L, by an outwardly arched section.

According to an embodiment, the sealing member has an annular shape.

According to an embodiment, the sealing member 54 is defined by a partially spherical outer surface 59.

In other terms, the sealing member is defined by an outer surface 59 formed by a spherical surface portion defined by two planes that are parallel and equidistant from the center of said spherical surface.

According to the invention, the outer surface 59 is free from interruptions and free from grooves.

In other terms, the outer surface 59 extends with continuity.

Such a shape facilitates the outward deformation of the sealing member so as to act with force against the conduit inner surface and to obtain a very efficient seal. Furthermore, the sealing member, being elastically deformable, adapts itself to small imperfections of the conduit inner surface.

According to an embodiment, at least one of the first base end 61 and the second base end 62 comprise a second projecting annular edge 62'.

According to another embodiment, the first base end 61 comprises a projecting annular edge 61', and said second base end 62 comprises a second projecting annular edge 62'.

The first compression member 55 and the second compression member 56 may comprise, respectively, a first annular groove 63 and a second annular groove 64 that are so configured as to receive said first and second small edges 61', 62', respectively.

This provision allows holding the sealing member 54 base ends in place, also during the compression exerted by the compression members 55 and 56.

In accordance with the invention, the compression means 55 and 56 comprise a tubular connection member 58 having a first end 58' orthogonally and centrally secured to the first compression member 55, and a second threaded end 58".

Furthermore, the second compression member 56 comprises a central through hole 68' slidably couplable in the longitudinal direction with said connection member 58, said second compression member 56 being able to be brought near to the first compression member 55 by screwing a nut 57 to said second threaded end 58".

In other terms, the compression members 55 and 56 are slidably mutually connected according to the longitudinal axis L-L.

Furthermore, the compression members 55 and 56 comprise respective mutually operatively facing and parallel inner faces 85 and 86.

Therefore, the compression members 55 and 56 are slidably mutually connected so as to bring the inner faces 85 and 86 near or to move them away in a direction perpendicular to the same faces.

Particularly, the compression members 55 and 56 mutually define a free space 87 defined by said faces 85 and 86 and the inner surface 66 of the sealing member 54. Particularly, the free space 87 has a volume that varies as the relative distance between the compression members 55 and 56 varies, as measured along a direction parallel to the longitudinal axis L-L.

The through opening 51 is so configured as to allow the dragging rope operatively passing through the free space 87.

Advantageously, the dragging rope 4 passes within the sealing means 54, particularly having an annular shape.

Advantageously, the pressurized air inlet 80 is formed by a longitudinally through hole 80 of the tubular connection member 58.

In other terms, the through hole 80 allows inletting or forcedly inserting the pressurized air into the conduit, at a first end 6 thereof.

According to the invention, the through opening 51, comprises a first hole 73 passing through the first compression member 55, and a groove 71 passing through said first compression member 55, that is open radially outwardly and starting from said first hole 73.

Furthermore, the opening 51 comprises a second hole 74 passing through said second compression member 56, and a groove 72 passing through said second compression member 56, which is open radially outwardly and starting from said second hole 74.

In other terms, the grooves 71 and 72 extend starting from an outer edge of the compression members 55 and 56 until reaching the corresponding hole 71 or 72.

The grooves 71 and 72 the insertion dragging rope 4 in the transversal direction starting from outside of the compression members 55 and 56 until reaching the corresponding holes 73 and 74. At the same manner, they allow withdrawing the dragging rope 4 in the transversal direction to the longitudinal axis L-L.

According to an embodiment, the grooves 71 and 72 have a constant width as measured along a plane orthogonal to the longitudinal axis L-L.

The first hole 73 and the second hole 74 are arranged so as to be operatively mutually alignable to allow the dragging rope 4 passing longitudinally through the closure device 50.

In other terms, each compression member 55 and 56 comprises a hole 73 or 74 having a diameter configured to allow the passage of the dragging rope 4, avoiding the leakage of the pressurized air inserted in the tube. Particularly, the diameter of the holes 73 and 74 is slightly larger than the dragging rope 4 diameter.

According to an embodiment, the first groove 71 and the second groove 72 are not operatively mutually aligned. In other terms, the grooves 71 and 72 are configured such that they are not mutually facing when the compression members 55 and 56 are mounted together.

This provision involves the advantage that, once the guide rope is in its operative position, passing through the holes 73 and 74, it cannot exit inadvertently such holes. In other terms, the grooves 71 and 72 operatively hold the guide rope 4 in a direction transversal to the longitudinal axis L-L, and allow at the same time the free sliding of the guide rope 4 in a direction parallel to the longitudinal axis L-L.

For example, but not necessarily, the grooves 71 and 72 are configured in a "L" shape, having a first length parallel to the radius of the compression member 55 and 56, and a second length connecting with the hole 73 or 74, orthogonal to the first length. In other terms, the first lengths of the two grooves 71 and 72 are operatively mutually parallel, and also at a radius of the compression members, while the secondi lengths are mutually aligned.

According to an embodiment, the closure device 50 comprising reference means between the first compression member 55 and the second compression member 56, so that, operatively, the first compression member 55 and the second compression member 56 are kept mutually aligned in the angular direction so that the first hole 73 and the second hole 74 are mutually aligned.

According to an embodiment, the above-mentioned reference means comprise a reference profile 67 laterally projecting from said tubular member 58, and a complementary groove 68 obtained in the central through hole 68' of the second compression member 56.

In such a manner, the second compression member 56 is forced to be mounted in only one preset angular position with respect to the first compression member 55, so that the first hole 73 remains aligned with the second hole 74 in use.

According to a possible embodiment, the sealing member 54 is made of silicone or rubber.

Particularly, the sealing member is made of a material other than a metal material.

According to a possible embodiment, the first and/or the second compression member 55, 56 is obtained in a plastic material, particularly a polymeric material, or in a metal material.

According to a further aspect, the above-mentioned objects and advantages are achieved according to the present invention with a kit for laying a dragging rope 4 in a conduit 100 by a pressurized air flow 2 introduced in said conduit 100, comprising a shuttle 10 as described above, and a closure device 50 as described above.

According to another aspect of the present invention, the above-mentioned objects and advantages are achieved by a shuttle 10 having the function to allow laying a dragging rope 4 in a conduit 100 by running along the conduit 100 from a first end 6 to a second end 8 according to a forward direction 5 dragging a free end of the dragging rope 4.

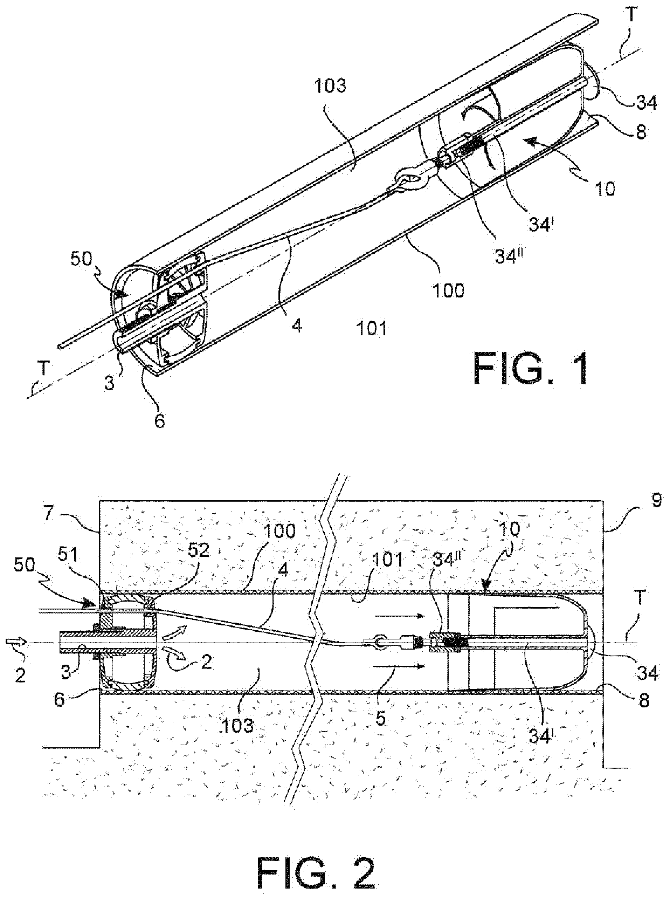

The shuttle is operatively pushed by a pressurized air flow 2 introduced at the first end 6 of the conduit 100. (Fig. 2)

The shuttle has a front end 12 and a rear end 13 arranged in the forward direction 5 of the shuttle 10.

In a general embodiment, the shuttle 10 comprises a sleeve portion 14 extending along a first longitudinal axis P-P.

The sleeve portion 14 is formed by a wall extending about the first longitudinal axis P-P, and it is defined by an outer side surface 15 and an inner side surface 16.

According to an embodiment, the sleeve portion 14 has a substantially cylindrical shape, having a substantially cylindrical outer surface 15, or, alternatively, slightly divergent towards the rear end 13 according to a first divergence angle 26. For example, the divergence angle ranges between 0° and 3°.

The shuttle 10 further comprises a front wall 17, for example, but not necessarily, which is externally convex, having an outer front surface 17 and an inner front surface 19 and it anteriorly closes the sleeve portion 14. Particularly, the outer side surface 15 of the sleeve portion may be connected with continuity, having a shape with the outer front surface 18, avoiding a sharp edge or a step. In other terms, the outer side surface 15 is tangent to the outer front surface 18 along a connection line 47 therebetween.

The sleeve portion 14 and front wall 17 assembly forms a substantially glass- or bucket-shaped member.

In other terms, the sleeve portion 14 and front wall 17 assembly has an axial-symmetric shape.

The shuttle 10 further comprises an elongated member 20 arranged within the sleeve portion 14, having a second longitudinal axis C-C and engaging means 34 of the dragging rope 4 along said second longitudinal axis C-C.

Furthermore, the elongated member 20 has a first end 21 connected to the front wall 17 along the first longitudinal axis P-P and a second free end 22 transversally mobile with respect to the first longitudinal axis P-P from a rest position in which said end 22 is arranged on the first longitudinal axis P-P to a position transversally shifted with respect to the first longitudinal axis P-P when it is stressed with a force N transversal to the second longitudinal axis C-C exerted by the tension T of the dragging rope 4.

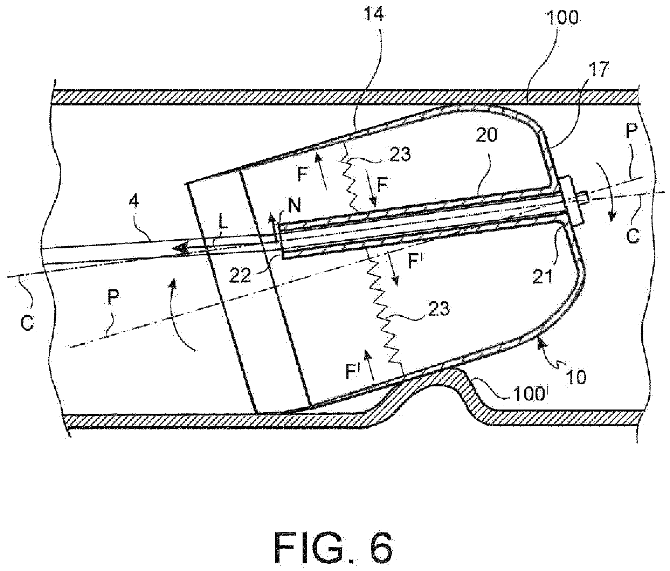

In other terms, the shuttle is configured to allow the elongated member free end 22 moving from the first longitudinal axis P-P of the sleeve portion 14, for example, allowing the elongated member 20 inclining with respect to the sleeve portion 14. (Fig. 6)

According to a possible embodiment, in fact, the front wall 17 is made of an elastically deformable material, and the first end 21 of the elongated member 20 is secured to said front wall 17. In such a manner, the second longitudinal axis C-C of the elongated member 20 may be inclined with respect to the first longitudinal axis P-P of the sleeve portion 14, particularly by virtue of the front wall 17 deformability.

As shown in Fig. 6, the shuttle 10 further comprises elastic connecting means 23 connecting the elongated member 20 to the sleeve portion 14 in a direction transversal to the second longitudinal axis C-C, which are suitable to exert elastic forces F, F' for self-aligning the sleeve portion 14 with respect to the elongated member 20 when the second end 22 is in said shifted position to align the first longitudinal axis P-P with the second longitudinal axis C-C. The self-aligning forces generate a self-aligning torque A, which tends to bring the shuttle back to the proper orientation to avoid sticking.

In this regard, Fig. 6 shows a schematic view of a shuttle as described above, shown in a deformed configuration in which the free end 22 of the elongated member 20 is moved with respect to its rest position. The shuttle 10 comprises elastic connecting means 23 acting between the elongated member 20 and the sleeve portion 14 by the forces F and F'.

The second longitudinal axis C-C of the elongated member is shown in an inclined position with respect to the first longitudinal axis P-P. In such configuration, the shuttle has met an obstacle along the conduit, which caused the inclination thereof with respect to the conduit axis. In this configuration, the dragging rope 4 applies a force N to the free end 22 of the elongated member 20 in a direction transversal to the elongated member 20 axis, and, at the same time, the forces F and F' tend to rotate the first longitudinal axis P-P of the sleeve until aligning it with the elongated member 20 axis, tending to align the sleeve portion axis to the conduit axis, allowing the shuttle overcoming the obstacle 100', thereby avoiding the sticking thereof at the obstacle 100'.

In other terms, the shuttle 10 comprises radial connection means 23 connecting at least one portion of said elongated member 20 with at least one portion of the inner side surface 16. These connection means 23 may be extended and are elastically compressible in the radial direction with respect to the longitudinal axis P-P. In such a manner, such connection means 23 allow the elastic deformation of the sleeve portion 14 when the shuttle meets a crushing of the conduit or at a narrow curve, while allowing keeping the shuttle longitudinal axis P-P in a position substantially parallel to the forward direction thereof, and thus in a direction substantially parallel to the conduit T-T axis. In other terms, the radial connection means 23, when the shuttle tends to be inclined with respect to the conduit axis due to obstacles or other hindrances, they immediately cooperate to straighten the shuttle with respect to the conduit axis, avoiding the sticking of the shuttle.

The reason why the radial connection means cooperate to straighten the shuttle when it tends to be inclined with respect to the conduit axis will be explained herein below.

As shown in Fig. 6, and as disclosed above, the radial connection means 23 may be schematized by a plurality of compression/traction springs, arranged radially between the elongated member 20 and the sleeve portion 14. When the shuttle is located with the axis P-P thereof in a position parallel to the conduit T-T axis, all the springs are in equilibrium and hold the shuttle in this position.

On the contrary, when the shuttle is inclined with respect to the conduit axis, the guide rope 4 applies to the rear end 22 of the elongated member 20 a rope tension component, orthogonal to the conduit axis, tending to align the elongated member 20 with the conduit T-T axis. In this configuration, the elongated member 20 is aligned with the conduit T-T axis, while the sleeve portion 14 turns out to be inclined with respect to the conduit T-T axis, therefore some of the connection means, schematized by springs, are compressed, while other ones arranged on the opposite side, are stretched. The resultant force of the elastic forces exerted by such connection means in the radial direction rotate the sleeve portion, thus bringing it back to the coaxial position with the elongated member.

In accordance with an embodiment, the sleeve portion 14 is made of an elastically deformable material so as to be able to deform from a cylindrical configuration 10' at rest to a flattened configuration 10" in the direction transversal with respect to the first longitudinal axis P-P, so that the diameter thereof in a first direction Q is reduced compared to that of the cylindrical configuration, and, in a second direction R, it is elongated compared to that of the cylindrical configuration, said plurality of membrane 23 consequently elastically deforming.

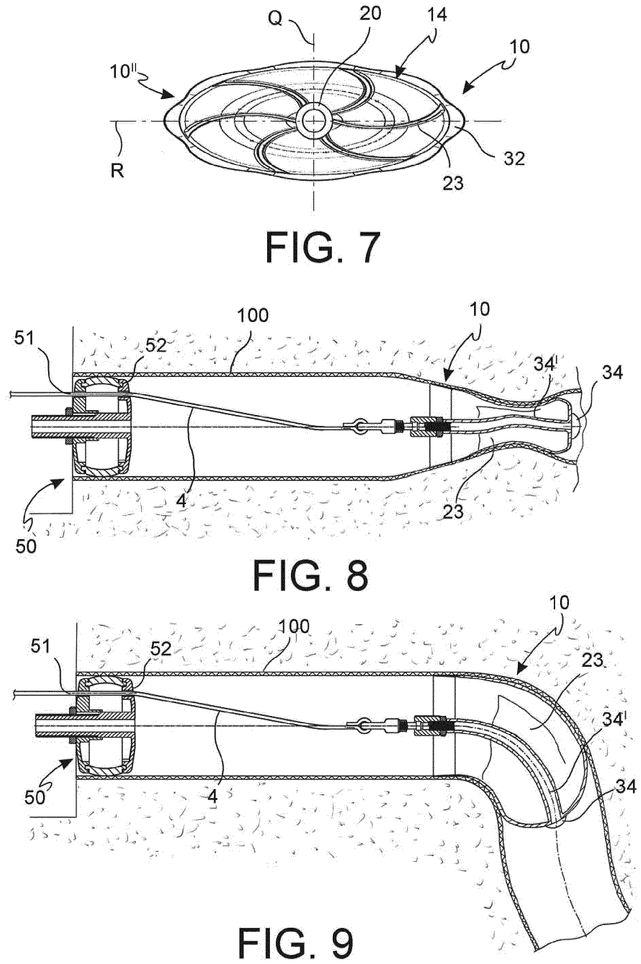

The connection means 23 are so configured as to allow the above-mentioned deformation of the sleeve portion 14. In other terms, the connection means 23 are so configured as to be able to extend and shorten in the radial direction to allow the deformation of the sleeve portion 14. As shown in Fig. 7, in the deformed, or flattened, configuration of the shuttle, the connection means 23, or the membranes 23, are elongated in a first direction R and shortened in a second direction Q orthogonal to the first one.

According to a preferred embodiment, the connection means 23 comprise a plurality of membranes 23, having a first side secured to the elongated member 20 and a second side secured to the inner side surface 16.

Such membranes are made of an elastically deformable material, for example, silicone.

Such membranes also comprise a free edge 24 facing the shuttle 10 rear end.

According to an embodiment, at least two of said membranes 23 extend in a direction parallel to the longitudinal axis P-P starting from the inner front surface 19 up to said free edge 24, defining at least two elongated cells 25 that are anteriorly closed and posteriorly open.

According to another embodiment, all the membranes 23 extend in a direction parallel to the longitudinal axis P-P, starting from the inner front surface 19 up to said free edge 24, defining a plurality of elongated cells 25 that are anteriorly closed and posteriorly open, arranged radially about the elongated member 20.

According to an embodiment, to each membrane 23 corresponds an opposite membrane 23 symmetrically arranged with respect to the longitudinal axis, arranged so that said membranes 23 exert opposite elastic forces between the sleeve portion 14 and the elongated member 20.

In accordance with an embodiment, at least one of the membranes 23 of said plurality has a first side connected to the elongated member, and a second side connected to the inner side surface 16 along an intersection line with a plane passing through the longitudinal axis P-P.

According to an embodiment, at least one membrane 23 of the plurality of membranes has a first side secured to the elongated member, and a second side secured to the inner side surface 16 along an intersection line with a plane passing through the longitudinal axis (P-P).

Particularly, the section with a plane (VI-VI) orthogonal to the longitudinal axis (P-P) of at least one membrane (23) of said plurality of membranes has a curved profile (28).

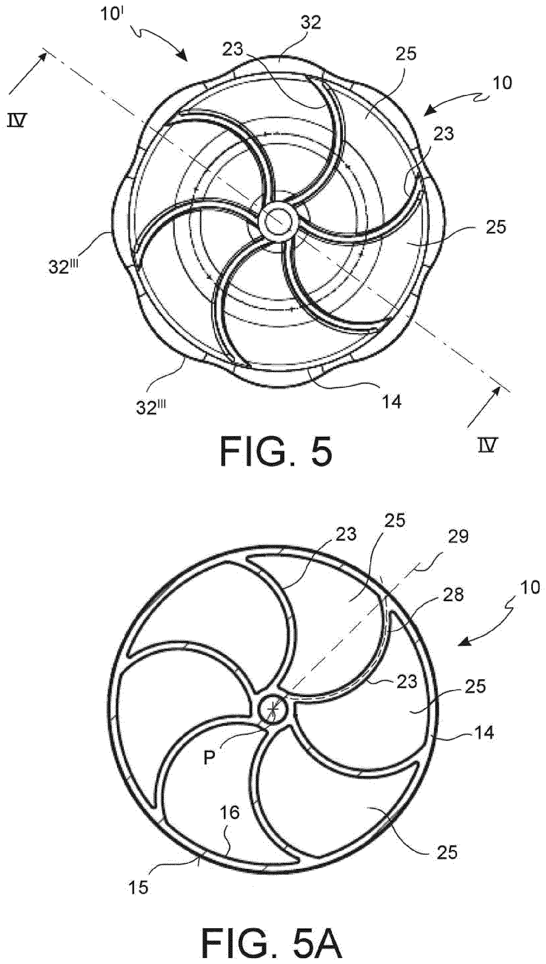

According to a preferred embodiment, at least one membrane (23) of said plurality is configured according to a cylindrical surface portion with an axis parallel to the longitudinal axis, as shown in Figs. 5 and 6.

For example, but not necessarily, the section with a plane VI-VI orthogonal to the longitudinal axis P-P of at least one membrane 23 of said plurality of membranes has a semicircle profile 28 arranged at a preset side with respect to a radius of a circumference with center on the longitudinal axis P-P.

For example, all the membranes 23 have a shape that is substantially the same, and are circumferentially arranged uniformly about the elongated member 20, forming a plurality of closed cells, substantially mutually identical, suitable to receive the thrust of the pressurized air 2.

According to an embodiment, such membranes 23 are, for example, but not necessarily, in a number of 6, forming 6 substantially identical cells.

For example, but not necessarily, the outer front surface 18 comprises at least one spherical portion 18'.

According to an embodiment, the outer front surface 18 comprises a transversal flattening 18" to the first longitudinal axis P-P.

In accordance with an embodiment, the outer front surface comprises a beveled joint between said at least one spherical portion 18' and said flattening 18".

In accordance with an embodiment, the sleeve portion 14 is made of an elastically deformable material. In such a manner, such sleeve portion 14 is capable of deforming to adapt to the inner shape 101 of the conduit to be run along.

For example, but not necessarily, the sleeve portion 14 is made of silicone. In such a case, the pressurized air flow 2 that is collected by the shuttle slightly inflates the sleeve portion 14, thus promoting the air sealing between the shuttle and the conduit.

In accordance with an embodiment, the elongated member is made of an elastically flexible material so as to adapt to the passage through narrow curves of the conduit 100.

According to an embodiment, the elongated member 20 is a tubular member that has an inner axial hole 33 open at both ends 27, 22 of the tubular member and communicating with the outside both at the shuttle front end 12, and at the shuttle rear end 13.

Such hole 33 is suitable to pass an end of the dragging rope 4 therein, to secure it to the elongated member 20 by said engaging means 34.

In such a case, the engaging means 34 of the dragging rope 4 to the elongated member comprise a stop block 34 secured to the free end of the dragging rope 4, the dragging rope being preventively inserted through the axial hole 33, said stop block 34 ending in abutment on the outer front surface 18 at the end opening 27.

According to a possible embodiment, the engaging means 34 comprise a pin 34' ending with an enlarged head 34 suitable to engage in abutment on said outer front surface 18, said pin being inserted in the inner axial hole 33 until projecting a threaded portion through the opening of the elongated member 20 at the free end 22 thereof, a connecting loop 34" being connectable to said threaded portion'. For example, the pin 34' is made of a flexible material so as to allow the elastic deformation of the elongated member 20.

According to an alternative embodiment, the elongated member 20 is formed within the thickness of the membranes 23 and in the intersection of all the membranes 23 at the second longitudinal axis C-C. In such a case, the elongated member 20 avoids to have an axial through hole 33. In such a case, the dragging rope securing means are located at the elongated member 20 free end 22.

In accordance with a preferred embodiment, the thicknesses of the front wall 17, the sleeve portion 14, and the membranes 23 are so configured that the shuttle has a gradually decreasing deformability starting from a central area 27 of the front wall 17 up to the rear end 13.

In accordance with an embodiment, the thickness of the front wall 17 and of the sleeve 14 are gradually decreasing starting from a central area 27 of the front wall 17 up to the rear end 13.

According to a preferred embodiment, the sleeve portion 14 comprises a tail length 30 having a preset length s, posteriorly projecting in a direction parallel to the longitudinal axis P-P with respect to the connection means 23, or to said free edge 24 of said plurality of membranes 23, up to the shuttle rear end 13.

The above-mentioned tail length is made of an elastically deformable material, and preferably, but not necessarily, obtained as a single piece with the remaining part of the sleeve portion 14.

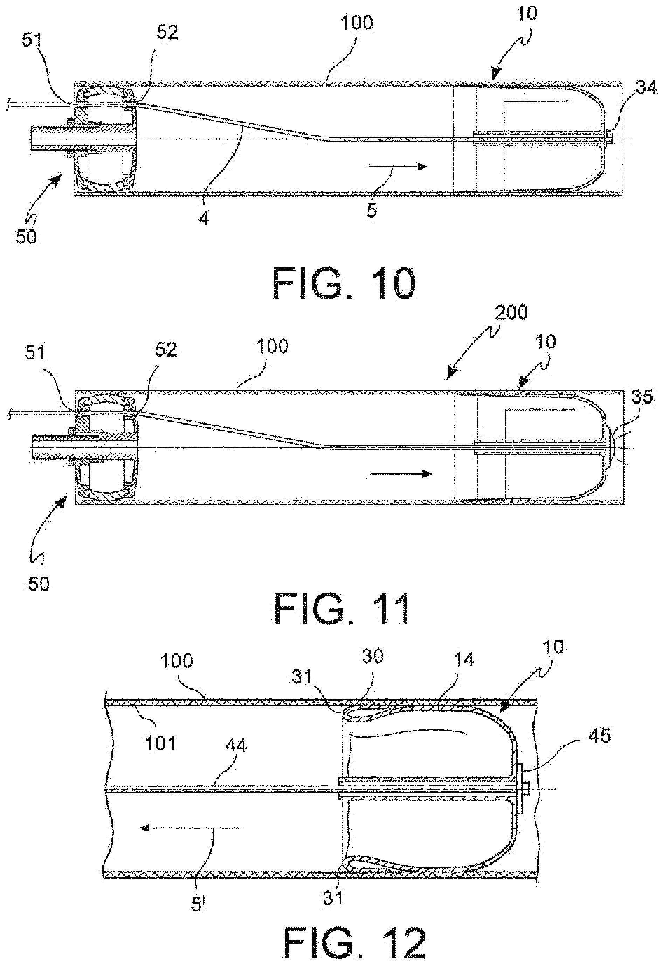

The length s is selected so as to allow outwardly folding such tail portion 30 about the sleeve portion 14 when the shuttle 10 is pulled in a direction opposite the forward direction 5 by the dragging rope 4, thereby providing a rounded guide surface 31 to allow the backward motion 5' of the shuttle 10. Such a behaviour is shown in Fig. 12.

If, for any reasons, in fact, it would be necessary to stop the shuttle and drag it in an opposite direction 5' to the forward direction 5, the tail portion 30 free end would be hold by the friction with the conduit inner surface; therefore, it would face outwardly of the outer surface 15 of the sleeve portion, as shown in Fig. 12.

In this configuration, a curved surface 31 would be formed between the sleeve portion 14 and the turned over tail length 30, promoting the dragging of the shuttle in an opposite direction 5' to the forward direction 5.

In accordance with an embodiment, the sleeve portion 14 ends posteriorly with a sealing skirt 32 suitable to deform more than the sleeve portion 14 or the tail portion 30.

Particularly, the sealing skirt 32 is divergent posteriorly with respect to the outer side surface 15 of the sleeve portion 14 according to a preset divergence angle 36, so as to drag on an inner surface 101 of the conduit 100.

Particularly, the sealing skirt 32 may have a section with a plane passing through the first longitudinal axis (P-P), which is tapered towards the rear end. (13) starting from the thickness (14') of the sleeve portion (14), or the tail portion (30), ending posteriorly with a sharp edge (14"). In other terms, the sealing skirt 32 wears thin starting from an attachment portion to the sleeve or the tail portion up to the rear end 13.

According to an embodiment, the sealing skirt 32 defines an outer conical surface 32' and an inner conical surface 32", intersecting along a line forming the sharp edge 14".

In accordance with an embodiment, such outer conical surface 32' and said inner conical surface 32" are corrugated. In other terms, the outer conical surface 32' and the inner conical surface 32" are defined by varying in an even alternated manner the opening angle thereof.

In other terms, the sealing skirt 32 ends posteriorly with a rimmed edge comprising a plurality of loops 32"'. For example, but not necessarily, the rimmed edge comprises a number of loops 32" other than the number of the membranes 23.

The presence of the rimmed edge involves the advantage of promoting the sealing ability, since it is more deformable than the remaining part of the shuttle 10. Furthermore, when the shuttle is dragged in a direction opposite the forward direction, such a configuration promotes the adhesion to the conduit inner surface, and therefore turning outwardly of the tail portion 30.

In accordance with an embodiment, the front wall 17 has an outer surface 18 that is suitably shaped to receive an engaging member 34 for the dragging rope 4, said rope 4 being inserted through the axial hole 33 of the tubular member 20.

According to a particular embodiment, the front wall 17 has an outer surface 18 that is suitably shaped to receive an electronic vision device 35 supplied via an electric cable 44 inserted through the axial hole 33 of the tubular member 20.

In accordance with an embodiment, the shuttle is made of a material that is elastically flexible and capable of elastically maintaining its shape so as to be guided through the conduit while keeping the longitudinal axis P-P parallel or tangent to the forward direction 5.

According to a preferred embodiment, the whole shuttle 10 is formed in a single piece with the same elastic material, the whole shuttle 10 thus turning to be elastically deformable.

In other terms, in accordance with an embodiment, the front wall 17, the sleeve portion 14, the membranes 23, the elongated member 20, the tail portion (30), and the sealing skirt 32 are all formed together in a single piece from the same elastically deformable material.

A behaviour of the shuttle 10 is shown in Fig. 8, which shuttle is entirely made of an elastically deformable material, when it passes through an irregular bottleneck of the conduit 100. In fact, the shuttle 10 deforms, adapting the sleeve portion, particularly the sleeve portion outer surface, to the irregular shape of the bottleneck, ensuring an excellent seal of the air pressure, which is able to continue pushing the shuttle 10 with the maximum efficiency and without leakage losses. The membranes 23 and the elongated member also accordingly deform.

Another behaviour of the shuttle at a narrow curve is shown in Fig. 9. The sleeve portion 14 deforms according to the conduit inner surface, ensuring a seal against the pressure loss of the air flow suitable to push the shuttle and, at the same time, also the membranes 23 accordingly deform. In the embodiment shown in the figure, also the elongated member 20 accordingly deforms.

An embodiment is shown in Fig. 10, in which the dragging rope is directly inserted through the axial hole 33 of the elongated member 20, and anteriorly projects from the hole front end. The projecting part of the rope is secured with a small stop block, for example, a small cylinder with a central hole through which the rope end has to be passed, and a transversal through hole in which a securing screw is screwed.

As shown in Fig. 11, according to another aspect of the invention, a visual inspection device 200 of a conduit 100 is provided, comprising a shuttle as described above, and a video camera 35 mounted on the front wall 17 at the front end 12 of the shuttle 10.

The video camera may require an electric cable for supplying and transmitting a signal comprising the detected visual cables. In such a case, the dragging rope may be replaced with the above-mentioned electric cable. Particularly, the electric cable is inserted through the axial hole of the elongated member 20 and connected to the video camera 35 mounted at the shuttle front end.

Alternatively, supply means may be provided, integral with the shuttle and optionally, in addition, airwave transmission means of the signal. In such a case, an electrical cable may not be needed, and the same dragging cable 4 as described above would be used.

The shuttle 10 may further be provided with identification means of the position thereof in the conduit, when the conduit is not visible, for example, it is buried, comprising transmitting means and receiving means of a signal, for example, an ultrasound transmitter may be associated to the shuttle, while a receiver may be operated on the ground until it identifies the transmitter position. For example, at least one part of said means is mounted on the shuttle externally to the front end thereof, for example at the elongated member first end.

According to a further aspect, the above-mentioned objects and advantages are achieved according to the present invention, by means of a kit for laying a dragging rope 4 in a conduit 100 by a pressurized air flow 2 introduced in said conduit 100, comprising a shuttle 10 as described above and a closure device 50 as described above.

The above-mentioned kit may comprise, in addition, a connection device between an outlet end and an inlet end of two respective conduits arranged in succession.

For example, such device may comprise a connection tube having two opposite ends, which are sealingly engageable to an outlet end of a first conduit and to an inlet end of a second conduit, respectively, arranged in succession with respect to the first conduit.

Each of said opposite ends of said connection tube comprises a respective coupling member to said respective outlet end or inlet end.

According to a further aspect of the present invention, the above-mentioned objects and advantages are achieved by a system for laying electric cables in buried conduits, between a first end 6 and a second end 8 of the conduit 100, comprising:
- a shuttle 10 as described above, suitable to run along the conduit 100 from the first end 6 to the second end 8 of the conduit 100 dragging the dragging rope 4 or another dragging device so configured as to be pushed along said conduit by the action of pressurized air injected through said closure device, and suitable to drag a dragging rope 4;
- a closure device 50 as described above, mounted at the first end 6 of the conduit 100;
- means to obtain pressurized air to be flown in the conduit 100 through said inlet opening 80 of said closure device;
- means for dragging a second end of the dragging rope 4, while a first end of the cables to be laid in the conduit 100 was tied to the first end of the dragging rope 4.

To the above-described preferred embodiments of the device, those of ordinary skill in the art, to the aim of meeting contingent, specific needs, will be able to make a number of modifications, adaptations, and replacements of elements with functionally equivalent other ones, without anyhow departing from the scope of the following claims.

Particularly, the closure device 50 according to the invention may be also used together with any prior art shuttle different from the one described in the present description.

Furthermore, the kit according to the invention comprises a closure device 50 according to the invention and a different shuttle belonging to the prior art.

For example, the kit according to the invention, alternatively to the above-described shuttle, may comprise any known shuttle configured to be pushed along said conduit by the action of pressurized air injected through said closure device, suitable to drag said dragging rope.

## Claims

1. A closure device (50) for a conduit (100) for removably closing a first free end of a conduit to form a closed thrust chamber (103) defined by said closure device (50) and by a shuttle (10) sliding in said conduit (100) so that said shuttle can be pushed towards a second end (8) of the conduit by means of a pressurized air flow (2) introduced in said closed thrust chamber (103) through said closure device (50), said shuttle dragging a dragging rope (4),
said closure device (50) comprising:
- an elastic sealing member (54) having a continuous annular tubular shape, having a first base end (61) and an opposite second base end (62), said sealing member (54) defining a longitudinal axis (L-L), said sealing member (54) having an inner surface (66) and an outer surface (59);
- a first compression member (55) couplable to said first base end (61);
- a second compression member (56) couplable to said second base end (62);
- wherein the first compression member (55) and the second compression member (56) comprise respective inner faces (85, 86) which are operatively mutually facing and parallel;
- compression means (58) suitable to compress said sealing member (54) between said first compression member (55) and said second compression member (56), so that the sealing member (54) deforms radially expanding outwardly, thus increasing the diameter thereof;
- wherein said compression means (58) comprise a tubular connection member having a first end (58') orthogonally and centrally secured to the first compression member (55), and a second threaded end (58"), and said second compression member (56) comprises a central through hole (68') slidably couplable in the longitudinal direction with said connection member (58), said second compression member (56) being able to be brought near to the first compression member (55) by screwing a nut (57) on said second threaded end (58");
- a pressurized air inlet (80) passing through the compression means (58) of the closure device (50);
- a through opening (51) passing through the first compression member (55) and through the second compression member (56) of the closure device (50) to allow the passage of the dragging rope;
- wherein said through opening (51); comprises:
- a first hole (73) passing through said first compression member (55), and a groove (71) passing through said first compression member (55), which is open radially outwardly and starting from said first hole (73);
- a second hole (74) passing through said second compression member (56), and a groove (72) passing through said second compression member (56), which is open radially outwardly and starting from said second hole (74);
- said first hole (73) and said second hole (74) being arranged so as to be operatively mutually alignable to allow the dragging rope (4) passing longitudinally through the closure device (50) ;
**characterised in that**
- the outer surface (59) of the sealing member (54) is free from interruptions and grooves and extends with continuity;
- the first compression member (55), the sealing member (54), and the second compression member (56) mutually define a free space (87) between them, defined by said inner faces (85, 86) and by the inner surface (66) of the sealing member (54);
- the through opening (51) is configured as to allow the dragging rope operatively passing through the free space (87).

2. The closure device according to claim 1, wherein the sealing member (54) has an outwardly convex outer surface (59) and/or an outwardly convex inner surface (60), so that, when the sealing member 54 is compressed between the first compression member (55) and the second compression member (56), said sealing member (54) has a preferred radially outwardly preferred deformation configuration.

3. The closure device according to claim 1 or 2, wherein said first base end (61) comprises a projecting annular edge (61') and said second base end (62) comprises a second projecting annular edge (62'), and said first compression member (55) and said second compression member (56) comprise a first annular groove (63) and a second annular groove (64), respectively, which are so configured as to receive said first and second small edges (61', 62'), respectively.

4. The device according to at least one claim 1 to 3, wherein said pressurized air inlet (80) is obtained through a longitudinally through hole (80) through the tubular connection member.

5. The device according to claim 1, wherein the first groove (71) and the second groove (72) are operatively arranged in a non-aligned manner to one another.

6. The device according to at least one of the claims 1 to 5, comprising reference means between said first compression member (55) and said second compression member (56), comprising:
- a reference profile (67) laterally projecting from said tubular member (58), and
- a complementary groove (68) obtained in the central through hole (68') of the second compression member (56) so as to force the second compression member (56) to be mounted in only one preset angular position with respect to the first compression member (55), so that the first hole (73) remains aligned with the second hole (74), in use.

7. A kit for laying a dragging rope in a conduit, **characterized in that** it comprises:
- a closure device (50) according to at least one of the preceding claims,
- a shuttle (10) for laying a dragging rope (4) in a conduit (100) suitable to be pushed along a conduit (100) by a pressurized fluid that is introduced downstream of said shuttle (10) to run along the conduit (100) from a first end (6) to a second end (8) thereof according to a forward direction (5), said shuttle having a front end (12) and a rear end (13) with respect to said forward direction (5),
said shuttle comprising:
- a sleeve portion (14) defining a first longitudinal axis (P-P)
- a front wall (17) anteriorly closing said sleeve portion (14)
- an elongated member (20) extending within the sleeve portion (14) along a second longitudinal axis (C-C);
- engaging means (34) of the dragging rope to the elongated member along said second longitudinal axis (C-C), said engaging means (34) being suitable to receive a tension transmitted by the dragging rope;
- wherein said elongated member (20) is moveable between a rest position in which said second longitudinal axis (C-C) substantially coincides with said first longitudinal axis (P-P), and a shifted position in which said second longitudinal axis (C-C) is shifted with respect to the first longitudinal axis;
- elastic connecting means (23) connecting the elongated member (20) to the sleeve portion (14) transversally to the elongated member (20) so as to exert an elastic self-aligning force (F) to bring the elongated member (20) from the shifted position back to the rest position, said sleeve portion 14 reacting by moving in the opposite direction.

8. A system for laying electric cables in buried conduits, between a first end (6) and a second end (8) of a conduit (100), comprising:
- a shuttle (10) so configured as to be pushed along said conduit by the action of pressurized air injected through said closure device, suitable to drag a dragging rope (4);
- a closure device (50) according to at least one of the claims 1 to 6, which is mounted at the first end (6) of the conduit (100);
- means for producing pressurized air to be flown in the conduit (100) through said inlet opening (80) of said closure device;
- means for dragging a second end of the dragging rope (4), wherein a first end of the cables to be laid in the conduit (100) is tied to the dragging rope (4) first end.

## Patentansprüche

1. Verschlussvorrichtung (50) für eine Leitung (100) zum lösbaren Schließen eines ersten freien Endes einer Leitung, um eine geschlossene Schubkammer (103) zu bilden, welche durch die Verschlussvorrichtung (50) und durch eine Shutteleinheit (10) definiert ist, welche in der Leitung (100) gleitet, so dass die Shutteleinheit in Richtung eines zweiten Endes (8) der Leitung mittels eines unter Druck versetzten Luftstroms (2) geschoben werden kann, welcher in die geschlossene Schubkammer (103) durch die Verschlussvorrichtung (50) eingeführt wird, wobei die Shutteleinheit ein Zugseil (4) zieht, wobei die Verschlussvorrichtung (50) umfasst:
- ein elastisches Dichtungselement (54), welches eine kontinuierliche ringförmige röhrenförmige Gestalt aufweist, welche ein erstes Basisende (61) und ein entgegengesetztes zweites Basisende (62) aufweist, wobei das Dichtungselement (54) eine longitudinale Achse (L-L) definiert, wobei das Dichtungselement (54) eine innere Fläche (66) und eine äußere Fläche (59) aufweist;
- ein erstes Kompressionselement (55), welches mit dem ersten Basisende (61) koppelbar ist;
- ein zweites Kompressionselement (56), welches mit dem zweiten Basisende (62) koppelbar ist;
wobei das erste Kompressionselement (55) und das zweite Kompressionselement (56) jeweilige innere Flächen (85, 86) umfassen, welche betriebsmäßig zueinander weisen und parallel sind;
- Kompressionsmittel (58), welche dazu geeignet sind, das Dichtungselement (54) zwischen dem ersten Kompressionselement (55) und dem zweiten Kompressionselement (56) zu komprimieren, so dass sich das Dichtungselement (54) deformiert, wobei es sich radial nach außen ausdehnt, wodurch ein Durchmesser davon vergrößert wird;
- wobei die Kompressionsmittel (58) ein röhrenförmiges Verbindungselement mit einem ersten Ende (58') umfassen, welches an dem ersten Kompressionselement (55) orthogonal und zentral gesichert ist, und ein zweites mit einem Gewinde versehenes Ende (58") aufweist, und wobei das zweite Kompressionselement (56) ein zentrales Durchgangsloch (68') umfasst, welches in der longitudinalen Richtung mit dem Verbindungselement (58) gleitbar koppelbar ist, wobei das zweite Kompressionselement (56) in der Lage ist, nahe zu dem ersten Kompressionselement (55) dadurch gebracht zu werden, dass eine Mutter (57) an dem zweiten mit einem Gewinde versehenen Ende (58") angeschraubt wird;
- einen Einlass für unter Druck versetzte Luft (80), welcher durch die Kompressionsmittel (58) der Verschlussvorrichtung (50) tritt;
- eine Durchgangsöffnung (51), welche durch das erste Kompressionselement (55) und durch das zweite Kompressionselement (56) der Verschlussvorrichtung (50) tritt, um den Durchgang des Zugseils zu erlauben;
- wobei die Durchgangsöffnung (51) umfasst:
- ein erstes Loch (73), welches durch das erste Kompressionselement (55) tritt, und eine Nut (71), welche durch das erste Kompressionselement (55) tritt, welche radial nach außen offen ist und von dem ersten Loch (73) startet;
- ein zweites Loch (74), welches durch das zweite Kompressionselement (56) tritt, und eine Nut (72), welche durch das zweite Kompressionselement (56) tritt, welche radial nach außen offen ist und von dem zweiten Loch (74) startet;
- wobei das erste Loch (73) und das zweite Loch (74) angeordnet sind, um betriebsmäßig zueinander ausrichtbar zu sein, um dem Zugseil (4) zu erlauben, longitudinal durch die Verschlussvorrichtung (50) hindurch zu treten;
**dadurch gekennzeichnet, dass**
- die äußere Fläche (59) des Dichtungselements (54) frei von Unterbrechungen und Nuten ist und sich kontinuierlich erstreckt;
- das erste Kompressionselement (55), das Dichtungselement (54) und das zweite Kompressionselement (56) gemeinsam einen freien Raum (87) zwischen sich definieren, welcher durch die inneren Flächen (85, 86) und durch die innere Fläche (66) des Dichtungselement (54) definiert ist;
- die Durchgangsöffnung (51) dazu eingerichtet ist, dem Zugseil zu erlauben, betriebsmäßig durch den freien Raum (87) hindurch zu treten.

2. Verschlussvorrichtung nach Anspruch 1, wobei das Dichtungselement (54) eine nach außen konvexe äußere Fläche (59) und/oder eine nach außen konvexe innere Fläche (60) aufweist, so dass, wenn das Dichtungselement (54) zwischen dem ersten Kompressionselement (55) und dem zweiten Kompressionselement (56) komprimiert wird, das Dichtungselement (54) eine bevorzugte radiale nach außen gerichtete bevorzugte Deformationskonfiguration aufweist.

3. Verschlussvorrichtung nach Anspruch 1 oder 2, wobei das erste Basisende (61) einen vorstehenden ringförmigen Rand (61') umfasst und das zweite Basisende (62) einen zweiten vorstehenden ringförmigen Rand (62') umfasst, und das erste Kompressionselement (55) und das zweite Kompressionselement (56) eine erste ringförmige Nut (63) bzw. eine zweite ringförmige Nut (64) umfassen, welche so konfiguriert sind, um den ersten bzw. den zweiten schmalen Rand (61', 62') aufzunehmen.

4. Vorrichtung nach wenigstens einem der Ansprüche 1 bis 3, wobei der Einlass für unter Druck versetzte Luft (80) durch ein longitudinales Durchgangsloch (80) durch das röhrenförmige Verbindungselement erhalten wird.

5. Vorrichtung nach Anspruch 1, wobei die erste Nut (71) und die zweite Nut (72) betriebsmäßig zueinander in einer nicht-ausgerichteten Weise angeordnet sind.

6. Vorrichtung nach wenigstens einem der Ansprüche 1 bis 5, umfassend Referenzmittel zwischen dem ersten Kompressionselement (55) und dem zweiten Kompressionselement (56), umfassend:
- ein Referenzprofil (67), welches von dem röhrenförmigen Element (58) lateral vorsteht, und
- eine komplementäre Nut (68), welche in dem zentralen Durchgangsloch (68') des zweiten Kompressionselements (56) erhalten wird, um das zweite Kompressionselement (56) zu drängen, in nur einer voreingestellten Winkelposition in Bezug auf das erste Kompressionselement (55) montiert zu werden, so dass das erste Loch (73) mit dem zweiten Loch (74) im Gebrauch ausgerichtet verbleibt.

7. Ausrüstung, um ein Zugseil in eine Leitung zu legen, **dadurch gekennzeichnet, dass** sie umfasst:
- eine Verschlussvorrichtung (50) nach wenigstens einem der vorhergehenden Ansprüche,
- eine Shutteleinheit (10) zum Legen eines Zugseils (4) in eine Leitung (100), welche dazu geeignet ist, entlang einer Leitung (100) durch ein unter Druck versetztes Fluid, welches stromabwärts der Shutteleinheit (10) eingespeist wird, geschoben zu werden, um entlang der Leitung (100) von einem ersten Ende (6) zu einem zweiten Ende (8) davon gemäß einer Vorwärtsrichtung (5) zu laufen, wobei die Shutteleinheit ein vorderes Ende (12) und ein hinteres Ende (13) in Bezug auf die Vorwärtsrichtung (5) aufweist,
wobei die Shutteleinheit umfasst:
- einen Hülsenabschnitt (14), welcher eine erste longitudinale Achse (P-P) definiert
- eine erste Wand (17), welche den Hülsenabschnitt (14) anterior schließt
- ein längliches Element (20), welches sich innerhalb des Hülsenabschnitts (14) entlang einer zweiten longitudinalen Achse (C-C) erstreckt;
- Eingriffsmittel (34) des Zugseils mit dem länglichen Element entlang der zweiten longitudinalen Achse (C-C), wobei die Eingriffsmittel (34) geeignet sind, einen Zug aufzunehmen, welcher durch das Zugseil übertragen wird;
- wobei das längliche Element (20) zwischen einer Ruheposition, in welcher die zweite longitudinale Achse (C-C) mit der ersten longitudinalen Achse (P-P) im Wesentlichen zusammenfällt, und einer verlagerten Position bewegbar ist, in welcher die zweite longitudinale Achse (C-C) in Bezug auf die erste longitudinale Achse verlagert ist;
- elastische Verbindungsmittel (23), welche das längliche Element (20) mit dem Hülsenabschnitt (14) transversal zu dem länglichen Element (20) verbinden, um eine elastische selbst-ausrichtenden Kraft (F) auszuüben, um das längliche Element (20) aus der verlagerten Position zurück zu der Ruheposition zu bringen, wobei der Hülsenabschnitt (14) durch Bewegen in die entgegengesetzte Richtung reagiert.

8. System zum Legen elektrischer Kabel in vergrabene Leitungen, zwischen einem ersten Ende (6) und einem zweiten Ende (8) einer Leitung (100), umfassend:
- eine Shutteleinheit (10), welche so konfiguriert ist, dass sie entlang der Leitung durch die Wirkung von unter Druck versetzter Luft, welche durch die Verschlussvorrichtung injiziert wird, geschoben wird, welche dazu eingerichtet ist, ein Zugseil (4) zu ziehen;
- eine Verschlussvorrichtung (50) nach wenigstens einem der Ansprüche 1 bis 6, welche an dem ersten Ende (6) der Leitung (100) angebracht ist;
- Mittel zum Erzeugen von unter Druck versetzter Luft, um in der Leitung (100) durch die Einlassöffnung (80) der Verschlussvorrichtung zu strömen;
- Mittel zum Ziehen eines zweiten Endes des Zugseils (4), wobei ein erstes Ende der Kabel, welche in die Leitung (100) zu legen sind, mit dem ersten Ende des Zugseils (4) verknüpft ist.

## Revendications

1. Dispositif de fermeture (50) d'un conduit (100) pour fermer de manière amovible une première extrémité libre d'un conduit afin de former une chambre de poussée fermée (103) définie par ledit dispositif de fermeture (50) et par un élément de va-et-vient (10) coulissant dans ledit conduit (100) de sorte que ledit élément de va-et-vient peut être poussé vers une seconde extrémité (8) du conduit au moyen d'un courant d'air sous pression (2) introduit dans ladite chambre de poussée fermée (103) à travers ledit dispositif de fermeture (50), ledit élément de va-et-vient tirant un câble de traction (4),
ledit dispositif de fermeture (50) comprenant :
un élément d'étanchéité élastique (54) ayant une forme tubulaire annulaire continue, ayant une première extrémité de base (61) et une seconde extrémité de base (62) opposée, ledit élément d'étanchéité (54) définissant un axe longitudinal (L-L), ledit élément d'étanchéité (54) ayant une surface intérieure (66) et une surface extérieure (59) ;
un premier élément de compression (55) pouvant être couplé à ladite première extrémité de base (61) ;
un second élément de compression (56) pouvant être couplé à ladite seconde extrémité de base (62) ;
dans lequel le premier élément de compression (55) et le second élément de compression (56) comprennent des faces intérieures respectives (85, 86) qui sont respectivement tournées l'une vers l'autre et parallèles l'une à l'autre de manière opérationnelle ;
des moyens de compression (58) adaptés pour comprimer ledit élément d'étanchéité (54) entre ledit premier élément de compression (55) et ledit second élément de compression (56), de sorte que l'élément d'étanchéité (54) se déforme radialement en se dilatant vers l'extérieur, augmentant ainsi le diamètre de celui-ci ;
dans lequel lesdits éléments de compression (58) comprennent un élément de liaison tubulaire ayant une première extrémité (58') assujettie de manière perpendiculaire et centrale au premier élément de compression (55) et une seconde extrémité filetée (58"), et ledit second élément de compression (56) comprend un trou traversant central (68') pouvant être couplé de manière coulissante dans la direction longitudinale avec ledit élément de liaison (58), ledit second élément de compression (56) pouvant être amené près du premier élément de compression (55) en vissant un écrou (57) sur ladite seconde extrémité filetée (58") ;
une admission d'air sous pression (80) passant à travers les moyens de compression (58) du dispositif de fermeture (50) ;
une ouverture traversante (51) passant à travers le premier élément de compression (55) et à travers le second élément de compression (56) du dispositif de fermeture (50) pour permettre le passage du câble de traction ;
dans lequel ladite ouverture traversante (51) comprend :
un premier trou (73) passant à travers ledit premier élément de compression (55) et une rainure (71) passant à travers ledit premier élément de compression (55), qui est ouverte radialement vers l'extérieur et démarrant à partir dudit premier trou (73) ;
un second trou (74) passant à travers ledit second élément de compression (56) et une rainure (72), passant à travers ledit second élément de compression (56), qui est ouverte radialement vers l'extérieur et démarrant à partir dudit second trou (74) ;
ledit premier trou (73) et ledit second trou (74) étant agencés de façon à pouvoir être alignés réciproquement de manière opérationnelle pour permettre au câble de traction (4) de passer longitudinalement à travers le dispositif de fermeture (50) ;
**caractérisé en ce que**
la surface extérieure (59) de l'élément d'étanchéité (54) est dépourvue de ruptures et de rainures et s'étend de manière continue ;
le premier élément de compression (55), l'élément d'étanchéité (54) et le second élément de compression (56) définissent réciproquement un espace libre (87) entre eux, défini par lesdites faces intérieures (85, 86) et par la surface intérieure (66) de l'élément d'étanchéité (54) ;
l'ouverture traversante (51) est configurée pour permettre au câble de traction de passer de manière opérationnelle à travers l'espace libre (87).

2. Dispositif de fermeture selon la revendication 1, dans lequel l'élément d'étanchéité (54) possède une surface extérieure convexe vers l'extérieur (59) et/ou une surface intérieure convexe vers l'extérieur (60), de sorte que, lorsque l'élément d'étanchéité (54) est comprimé entre le premier élément de compression (55) et le second élément de compression (56), ledit élément d'étanchéité (54) possède une configuration de déformation radialement vers l'extérieur préférée.

3. Dispositif de fermeture selon la revendication 1 ou 2, dans lequel ladite première extrémité de base (61) comprend un bord annulaire faisant saillie (61') et ladite seconde extrémité de base (62) comprend un second bord annulaire faisant saillie (62') et ledit premier élément de compression (55) et ledit second élément de compression (56) comprennent une première rainure annulaire (63) et une seconde rainure annulaire (64), respectivement, qui sont configurées de façon à recevoir respectivement lesdits premier et second petits bords (61', 62').

4. Dispositif selon au moins une des revendications 1 à 3, dans lequel ladite admission d'air sous pression (80) est obtenue à travers un trou longitudinalement traversant (80) à travers l'élément de liaison tubulaire.

5. Dispositif selon la revendication 1, dans lequel la première rainure (71) et la seconde rainure (72) sont agencées de manière opérationnelle d'une manière non alignée l'une par rapport à l'autre.

6. Dispositif selon au moins une des revendications 1 à 5, comprenant des moyens de référence entre ledit premier élément de compression (55) et ledit second élément de compression (56), comprenant :
un profil de référence (67) faisant saillie latéralement dudit élément tubulaire (58), et
une rainure complémentaire (68) obtenue dans le trou traversant central (68') du second élément de compression (56) de façon à forcer le second élément de compression (56) à être monté dans une seule position angulaire prédéfinie par rapport au premier élément de compression (55), de sorte que le premier trou (73) reste aligné avec le second trou (74), en utilisation.

7. Kit de pose d'un câble de traction dans un conduit, **caractérisé en ce qu'**il comprend :
un dispositif de fermeture (50) selon au moins une des revendications précédentes,
un élément de va-et-vient (10) pour poser un câble de traction (4) dans un conduit (100) adapté pour être poussé le long d'un conduit (100) par un fluide sous pression qui est introduit en aval dudit élément de va-et-vient (10) pour circuler le long du conduit (100) d'une première extrémité (6) vers une seconde extrémité (8) de celui-ci selon une direction avant (5), ledit élément de va-et-vient ayant une extrémité avant (12) et une extrémité arrière (13) par rapport à ladite direction avant (5),
ledit élément de va-et-vient comprenant :
une partie de manchon (14) définissant un premier axe longitudinal (P-P)
une paroi avant (17) fermant de manière antérieure ladite partie de manchon (14)
un élément allongé (20) s'étendant dans la partie de manchon (14) le long d'un second axe longitudinal (C-C) ;
des moyens de mise en prise (34) du câble de traction avec l'élément allongé le long dudit second axe longitudinal (C-C), lesdits moyens de mise en prise (34) étant adaptés pour recevoir une tension transmise par le câble de traction ;
dans lequel ledit élément allongé (20) est mobile entre une position de repos dans laquelle ledit second axe longitudinal (C-C) coïncide sensiblement avec ledit premier axe longitudinal (P-P) et une position décalée dans laquelle ledit second axe longitudinal (C-C) est décalé par rapport au premier axe longitudinal ;
des moyens de liaison élastiques (23) reliant l'élément allongé (20) à la partie de manchon (14) transversalement par rapport à l'élément allongé (20) de façon à exercer une force d'auto-alignement élastique (F) pour ramener l'élément allongé (20) de la position décalée à la position de repos, ladite partie de manchon (14) réagissant en se déplaçant dans la direction opposée.

8. Système pour poser des câbles électriques dans des conduits enterrés, entre une première extrémité (6) et une seconde extrémité (8) d'un conduit (100), comprenant :
un élément de va-et-vient (10) configuré de façon à être poussé le long dudit conduit sous l'effet de l'air sous pression injecté à travers ledit dispositif de fermeture, adapté pour tirer un câble de traction (4) ;
un dispositif de fermeture (50) selon au moins une des revendications 1 à 6, qui est monté à la première extrémité (6) du conduit (100) ;
des moyens pour produire de l'air sous pression à faire circuler dans le conduit (100) à travers ladite ouverture d'admission (80) dudit dispositif de fermeture ;
des moyens pour tirer une seconde extrémité du câble de traction (4), dans lequel une première extrémité des câbles à poser dans le conduit (100) est attachée à la première extrémité du câble de traction (4).
